(19)

Europäisches
Patentamt
European
Patent Office
Office européen
des brevets

(11)     **EP 1 601 896 B1**

(12)                    **EUROPEAN PATENT SPECIFICATION**

(45) Date of publication and mention
of the grant of the patent:
**26.11.2008 Bulletin 2008/48**

(21) Application number: **04718998.0**

(22) Date of filing: **10.03.2004**

(51) Int Cl.:
*F24D 19/10* (2006.01)      *F16K 11/052* (2006.01)

(86) International application number:
**PCT/GB2004/000985**

(87) International publication number:
**WO 2004/081362 (23.09.2004 Gazette 2004/39)**

(54) **HEATING APPLIANCE**

HEIZEINRICHTUNG

APPAREIL DE CHAUFFAGE

(84) Designated Contracting States:
**AT BE BG CH CY CZ DE DK EE ES FI FR GB GR
HU IE IT LI LU MC NL PL PT RO SE SI SK TR**

(30) Priority: **11.03.2003 GB 0305566**

(43) Date of publication of application:
**07.12.2005 Bulletin 2005/49**

(73) Proprietor: **Microgen Energy Limited
Reading, Berkshire RG6 1PT (GB)**

(72) Inventors:
• **LOWRIE, James Robert
Derby,
Derbyshire DE1 2RR (GB)**
• **HASKO, Stephen Michael
Huntingdon,
Cambridgeshire PE28 4TQ (GB)**

• **OWENS, Anthony Peter Michael
London, N10 2LA (GB)**

(74) Representative: **Draper, Martyn John
Boult Wade Tennant
Verulam Gardens
70 Gray's Inn Road
London WC1X 8BT (GB)**

(56) References cited:
**DE-A- 19 533 729       DE-A- 19 534 909
GB-A- 1 240 346       GB-A- 1 269 128
GB-A- 2 027 774       GB-A- 2 156 963
US-A- 3 605 811       US-A- 3 752 439
US-A- 5 931 163       US-A- 6 056 001
US-B1- 6 295 828       US-B1- 6 357 463**

**Description**

The present invention relates to a heating appliance.

A heating appliance of this type is known from the document GB 2156963.

Splitter valves, such as those used in the heating appliance, are known in the art and are primarily used to handle powders, dry solids and slurries, although some types are available that can handle liquids or gases.

There are two main types of splitter valves. One is a Y line diverter, which contains a poppet whose position is adjustable to proportion incoming flow between two outlets. The second type of splitter is primarily used for liquid. Instead of using moving parts, the flow stream is altered by pneumatic pressure differential pumping.

US 4,169,354 discloses an air/gas diverter. This uses a butterfly valve to vary the proportion of flow that is directed through two parallel ducts. US 3,905,193 describes a diaphragm valve diverting air flow away from an exhaust system, with the proportion of flow directed to each outlet duct controlled by an exhaust manifold vacuum.

US 5,184,592 discloses a diverter valve for a premix flow providing variable flow to two outlet streams. The application is for internal combustion engines, with an atmospheric air intake to the valve. The splitter valve is used to vary the proportion of the incoming charge sent through the preheater after mixing. The degree of preheating is used to vary the density of the fuel: air charge and therefore torque. The arrangement is designed to be a replacement for a conventional throttle. The actual detail of the valve design is not disclosed.

The present invention is primarily a gas-fired domestic appliance, and more particularly, a domestic combined heat and power system using a linear free piston Stirling engine. In such a device, the Stirling engine can provide a certain amount of heat. However, in order to satisfy the overall domestic heat requirement, a supplementary burner is required. Both the Stirling engine burner and the supplementary burner require a supply of fuel and air. The two supplies can be independent. However, this introduces complexity also problems with hot gases from one burner being drawn back through an inactive burner. Therefore, preferably, the two burners are supplied with air from a single fan which is then split by a splitter valve into separate streams.

However, under the circumstances, the control of the splitter valve to ensure correct flows to the two burners is complicated by the non-linear operating characteristic of a simple vane-style diverter valve. The variation in flow through each pathway leaving such a valve is not uniform as the vane moves from one extreme to the other. It has been found that the flow in each outlet varies very little as the vane moves across the centre of the junction. In such a design, for each outlet, approximately 80% of the total change in flow occurs over the extreme 20% of the vane position. When the flow in each stream needs to be controlled using a combination of the fan speed and vane position, stable and robust control is difficult to achieve.

According to a first aspect of the present invention, there is provided a heating appliance comprising first and second burners, a supply of air, a splitter valve for splitting the supply of air into a stream feeding the first burner and a stream feeding the second burner, means for feeding combustible fuel to mix with the air, a controller for controlling the combustible fuel flow and a proportion of the air fed to each burner dependent on the appliance requirements, and a laminarising device for each of the stream feeding the first burner and the stream feeding the second burner positioned downstream of the splitter valve.

The laminarising device is preferably a plate with a plurality of apertures, but may also be a device with a significant dimension in the direction of flow which effectively provides a plurality of tubes through which the fluid flows.

An example of a splitter valve used in a heating appliance in accordance with the present invention will now be described with reference to the accompanying drawings, in which:

Fig. 1 is a perspective view of the valve casting with top plate removed;

Fig. 2 is a cross-section through line A-A in Fig. 1 showing the profiled orifice;

Fig. 3 is a cross-section through line Y-Y in Fig. 1;

Fig. 4 is a cross-section through line X-X in Fig. 1;

Fig. 5 is a graphical representation of the flow characteristics of a uniform orifice;

Fig. 6 is a similar representation of the flow characteristics of a profiled orifice;

Fig. 7 is a control map of the vane angle and fan speed characteristics for a dual burner; and

Fig. 8 is a schematic diagram of the air and gas supply to a dual burner system.

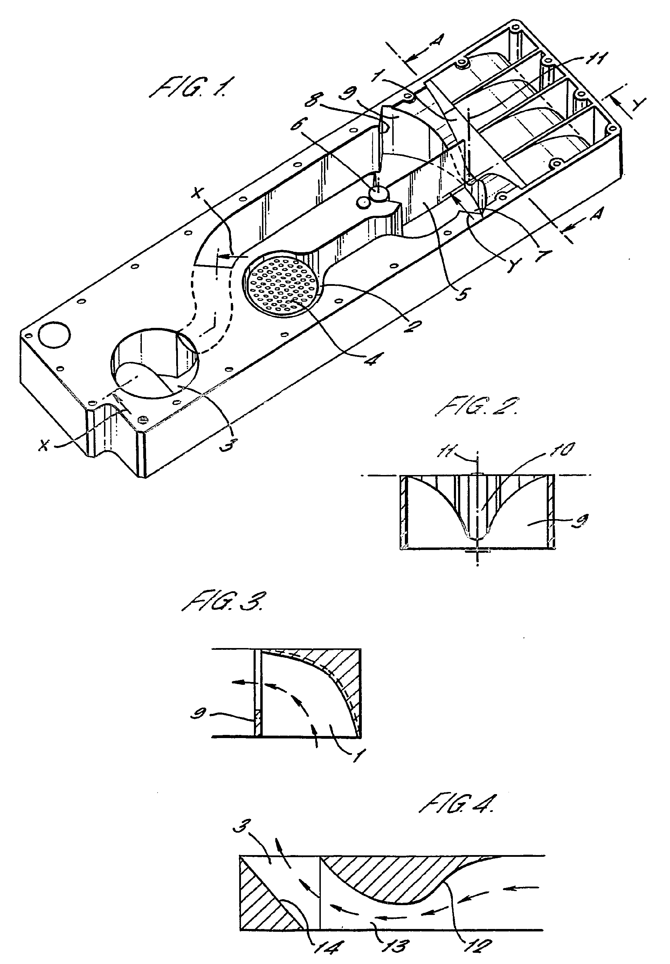

The valve casting of Fig. 1 has an air inlet port 1 having a curved shape as shown in Fig. 3. Two outlet ports 2,3 lead from the valve casting. The first of these is provided with a perforate plate 14. Ducting for the outlet port is provided on the bottom plate and ducting for the outlet parts is provided on the top plate (not shown).

Between the inlet duct 1 and the outlet ducts 2,3 is a splitter valve comprising a vane 5 which is rotatable about the spindle 6 under the control of a servo motor (not shown). Two valve seats 7,8 are provided in the casting to seat the vane 5 at the two extremities of its travel. When the valve is seated on seat 7, substantially all of the flow is directed to the second outlet 3, while when the valve is seated on seat 8, substantially all of the flow is directed to the first outlet 2. Immediately upstream of the vane 5 is a profiled plate 9, the downstream face of which has an arcuate shape to accommodate the movement of the vane 5.

The profile plate is best illustrated in Fig. 2. This illustrates the profiled orifice 10 as defined by the plate 9. The orifice 10 is symmetrical about a centre line 11. When the vane 5 is positioned on this centre line, equal flow is diverted to the two outlet ducts 2,3. The orifice 10 is profiled such that the general flow tends to be concentrated towards the centre line 11. The exact profile of the orifice is determined functionally in accordance with the considerations set out below.

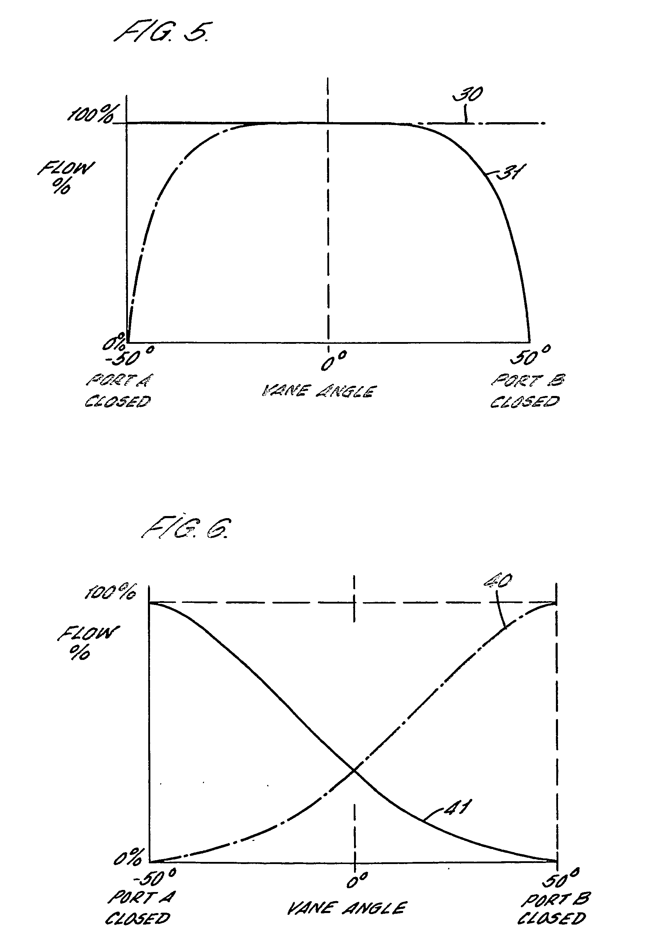

Fig. 5 shows the flow characteristics which will be obtained by a rectangular (letter box-shaped) orifice. In other words, this would be the profile if no profiled plate 9 were present in the valve shown in Figs. 1 and 2. The X axis shows the vane angle from a centre line shown as 0° in the centre of the graph, while the Y axis shows the percentage of flow out of the two outlet ports. Line 30 shows the flow to one outlet, while line 31 shows the flow to the other outlet. It is immediately apparent that moving the vane through a considerable angle away from the centre line has little or no impact in the flow to the two outlets. No control of the flows is therefore available in this range of movement. It is only once the valve gets relatively close to its closed position on either side that any significant change in flow is noticed.

By contrast, Fig. 6 shows the impact of the profiled orifice. Line 40 represents the flow to one outlet, while line 41 represents the flow to the other. Both lines are approximately linear, as compared to corresponding lines in Fig. 5. Obviously, true linearity is impossible to achieve in practice. However, what is apparent from Fig. 6 is that any variation in vane angle will result in a noticeable variation in the flow to the two ports. Therefore, the flow is now controllable to a far more accurate extent across the full range of vane angles. This allows more accurate control of both burners, with a resulting increase in the accuracy of control to the power and heat output.

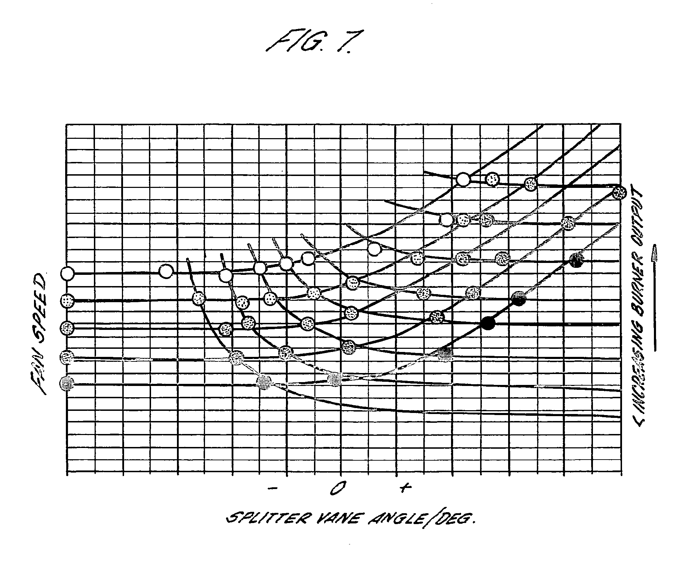

The flow to the two burners can be controlled simply by varying the fan speed and adjusting the position of the valve. Fig. 7 shows the control map derived using experimental data with the valve of Figs. 1 and 2. The required output from one burner is shown in a set of curves from left to right in Fig. 7, while the required output for the other is shown by the curves from right to left. The required fan speed and vane position are obtained at the cross-over point of the two curves. The exact change in fan speed with a vane angle for all combinations of burner flows has been derived experimentally, as the downstream gas path design will have significant impact on the flows involved.

The design of splitter valve could have applications beyond the current use in a twin-burner gas-fired appliance. Any dual burner system could incorporate such a valve. Potential applications include ventilation systems or industrial processes.

It should be noted that the vane 5 does not provide an airtight seal when it is seated. For the gas-fired domestic appliance for which the valve is designed, this is not a problem and can even be beneficial that it always provides a positive purge air flow to an unused burner. Indeed, a small hole may be provided through the vane to ensure that a purge flow is present.

The theory underlying the invention is as follows.

Airflow along the two separate outlet ducts is dependent on the speed of the fan and the relative flow resistance of each duct. The latter is dominated by the respective cross-sectional areas (immediately following the fan outlet) at which the airflow is divided.

For a given fan speed and, hence, total airflow into the splitter valve, the airflow along the two separate outlet ducts is dependent on the respective cross-sectional areas. Classical fluid dynamics show that the pressure drop through a burner or other restriction varies according to the inverse square of this cross-sectional area.

Pressure drops occur across both burners (these are fixed because they do not change their area) and across each arm of the splitter valve, the areas of which are subject to change via the vane position.

A further condition is that the total pressure drop in each arm, i.e., burner loss plus splitter valve loss, must be equal.

For a letter box shaped orifice, the open area for airflow down each tract is directly and linearly related to the angle of the vane.

If downline fixed pressure losses in each tract were negligible and equal, then flow split ratio between the tracts would depend primarily on the relative orifice areas in the splitter valve. A rectangular weir profile would provide a linear valve characteristic in this case. However, in reality downline losses are substantial and unequal. For this reason, a non-linear orifice area to vane angle relation is required in order to linearise the characteristic of the installed valve. In practical tests, a double-arched weir profile such as that illustrated in Fig. 2 has been found to work well in the gas-fired appliance application.

What is really required for smooth and linear control of air flow to a particular burner is to profile the weir such that the ratio of the square root of the sum of the fixed and variable pressure drops across each tract varies linearly with vane angle. This may be achieved empirically, for a specific fluidic circuit, by using an appropriately profiled weir.

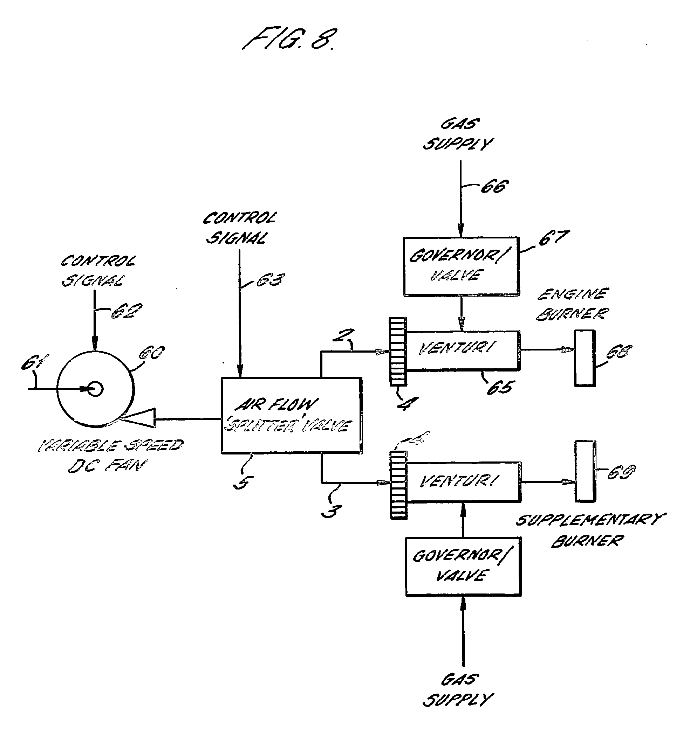

The gas train for a heating appliance is shown in Fig. 8. In this, the splitter valve 5 is as shown in Fig. 1. Air is fed to the splitter valve by a variable speed DC fan 60 from an inlet 61, controlled by a control signal 62. This flow is split as previously described under the control of control signal 63. The split flow is then passed through laminarising devices 4. These may take the form of perforated plates (one of which is shown in Fig. 1) or a set of channels, effectively providing a "honeycomb" arrangement. The open area of these devices is maximised in order to minimise the pressure drop caused by the devices.

An alternative laminarising device is shown in Fig. 1 in the line to the outlet 3. This takes the form of a ramped surface 12 which forms a constricted passage 13 along which the flow passes. The lower wall of outlet 3 is also ramped as shown at 14 to help smooth the flow.

Each laminarised stream then passes into a venturi 65 in which it is mixed with combustible gas 66 under the control of a governor valve 67 before being supplied to either the engine burner 68 or supplementary burner 69.

Although the perforated plate 4 is shown on outlet 2 to the engine burner 68 and the ramped surface 12 is shown on the outlet 3 to the supplementary burner 69, either type of laminarising device could be used on either outlet.

In order to design a weir for a specific application, and subsequently control the flow rates from each outlet, e.g. for a two channel gas train controlled by blower speed and splitter valve angle, a number of calculations can be performed:

<u>Basic Relations</u>

1. Volumetric flow along a tract, assuming turbulent flow (generally the case in real world devices and appliances of practical size)

$$Q = K.dP \qquad\qquad (1)$$

where:

dP is sum of pressure drops experienced by the flow in traversing the tract.
K is a geometric factor reflecting shape, texture and sectional area of the tract.

2. Volumetric output from a blower or fan

$$Q = f(dP, v, N)$$

where:

dP is pressure rise across fan;
v is kinematic viscosity;
N is speed of the rotor.

To a good approximation:

$$Q \propto N \qquad\qquad (2)$$

3. Conservation of flow, assuming an isothermal process:

$$Q_{fan} = Q_1 + Q_2 \qquad\qquad (3)$$

where:

$Q_{fan}$ is the flow induced by a blower, arranged as per Figure 8, labelled 61;
$Q_1$ is the flow exiting tract 1, labelled 2 on Figure 8;
$Q_2$ is the flow exiting tract 2, labelled 3 on Figure 8.

4. Summation of pressure drops, in a tract with single inlet and exit, the total dP equals the sum of the individual dP components. Hence:

$$dP_1 = \Sigma(\Delta P_{1V} + dP_{1F}) \qquad\qquad (4a)$$

$$dP_2 = \Sigma(\Delta P_{2V} + dP_{2F}) \qquad\qquad (4b$$

where:

$\Delta P_{1V}$ is the variable pressure drop created by the variable inlet area to tract 1 afforded by the splitter valve;
$\Delta P_{2V}$ is the variable pressure drop created by the variable inlet area to tract 1 afforded by the splitter valve;
$dP_{1F}$ is the sum of the fixed pressure drops, which occur along tract 1;
$dP_{2F}$ is the sum of the fixed pressure drops, which occur along tract 2.

<u>Flow Split Ratio</u>

1. Let the ratio of flows in tract 1 ($Q_1$) and tract 2 ($Q_2$) be R so that:

$$R = Q_1/Q_2$$

but, from equation 1:

$$R = K_1.dP_1/K_2.dP_1$$

or, if $X = K_1/K_2$:

$$R = X.dP_1/dP_2$$

2. From equation 4:

$$R = X.\Sigma(\Delta P_{1V} + dP_{1F})/(\Delta P_{2F} + dP_{2F}) \qquad (5)$$

3. The requirement is that:

$$R = f(\theta)$$

and preferably a linear function:

$$R \propto \theta$$

so that:

$$R = Z.\theta$$

where Z is a constant of proportionality.

This implies that we want:

$$X.(\Delta P_{1V} + dP_{1F})/(\Delta P_{2V} + dP_{2F}) = Z.\theta \qquad (6)$$

*The key to the design of the valve profile is ensure that both* $\Delta P_{1V}$ *and* $\Delta P_{2V}$ *change with vane angle* θ *in such a way that equation 6 is satisfied.*

Stepless control of flow volume from two tracts:

From equations (2) and (3)

$$Q_1 + Q_2 \propto N$$

$$Q_1 + Q_2 = Y.N$$

where Y is a constant of proportionality

$$Q_1 = Y.N - Q_2$$

$$Q_1 = Y.N - Q_1/R$$

so that:

$$Q_1 = Y.N/(1+1/R) \qquad (7)$$

and from equation (6):

$$R = X.(\Delta P_{1V} + dP_{1F})/(\Delta P_{2V} + dP_{2F}) = Z.\theta \qquad (8)$$

These two equations relate $Q_1$ and $Q_2$ to fan speed N and vane angle θ.

## Claims

1. A heating appliance comprising first and second burners (68, 69), a supply of air, a splitter valve (5) for splitting the supply of air into a stream feeding the first burner (68) and a stream feeding the second burner (69), means for feeding combustible fuel to mix with the air, a controller for controlling the combustible fuel flow and a proportion of the air fed to each burner (68, 69) dependent on the appliance requirements, and a laminarising device (4) for at least one of the stream feeding the first burner (68) and the stream feeding second burner (69) positioned downstream of the splitter valve (5).

2. A heating appliance according to claim 1, wherein one or each laminarising device (4) is a plate with a plurality of apertures.

3. A heating appliance according to claim 1 or claim 2, wherein one or each laminarising device (4) is a ramped surface which provides a constricted passage.

## Patentansprüche

1. Heizvorrichtung, umfassend erste und zweite Brenner (68, 69), eine Luftzufuhr, ein Teilungsventil (5) zum Aufteilen der Luftzufuhr in einen Strom, der den ersten Brenner (68) versorgt, und in einen Strom, der den zweiten Brenner (69) versorgt, Mittel zum Einspeisen von brennbarem Kraftstoff zum Vermischen mit der Luft, einen Kontroller zum Steuern/Regeln des brennbaren Kraftstoff-Stroms und zum Steuern/Regeln eines Anteils der Luft, die jedem Brenner (68, 69) in Abhängigkeit von den Vorrichtungs-Anforderungen zugeführt wird, und eine Laminarisierungsvorrichtung (4) für wenigstens einen der Ströme, die den ersten Brenner (68) oder den zweiten Brenner (69) versorgen, und die dem Aufteilungsventil (5) nachgeschaltet ist.

2. Heizvorrichtung nach Anspruch 1, wobei eine oder jede Laminarisierungsvorrichtung (4) eine Platte mit einer Mehrzahl von Öffnungen ist.

3. Heizvorrichtung nach Anspruch 1 oder 2, wobei eine oder jede Laminarisierungsvorrichtung (4) eine rampenartige Oberfläche ist, welche eine verengte Passage bereitstellt.

## Revendications

1. Appareil de chauffage comprenant des premier et second brûleurs (68, 69), une alimentation en air, une vanne (5) de répartition destinée à répartir l'alimentation en air en un courant alimentant le premier brûleur (68) et un courant alimentant le second brûleur (69), un moyen d'alimentation en combustible pour un mélange à l'air, une unité de commande destinée à commander l'écoulement de combustible et une proportion de l'air alimentant chaque brûleur (68, 69) suivant les exigences de l'appareil, et un dispositif (4) de laminarisation pour au moins l'un du courant alimentant le premier brûleur (68) et du courant alimentant le second brûleur (69) positionné en aval de la vanne de répartition (5).

2. Appareil de chauffage selon la revendication 1, dans lequel un ou chaque dispositif de laminarisation (4) est une plaque pourvue de plusieurs ouvertures.

3. Appareil de chauffage selon la revendication 1 ou la revendication 2, dans lequel un ou chaque dispositif (4) de laminarisation est une surface en rampe qui établit un passage étranglé.

EP 1 601 896 B1

FIG. 1.

FIG. 2.

FIG. 3.

FIG. 4.

8

FIG. 5.

FLOW %

100%

0% -50°

0°

VANE ANGLE

50°

PORT A CLOSED

PORT B CLOSED

30

31

FIG. 6.

FLOW %

100%

0% -50°

0°

VANE ANGLE

50°

PORT A CLOSED

PORT B CLOSED

40

41

FIG. 7.

FAN SPEED

< INCREASING BURNER OUTPUT

−   O   +

SPLITTER VANE ANGLE/DEG.

FIG. 8.

GAS
SUPPLY

66

CONTROL
SIGNAL

CONTROL
SIGNAL

63

GOVERNOR/
VALVE

67

ENGINE
BURNER

62

61

60

2

VENTURI

68

AIR FLOW
'SPLITTER' VALVE

4

65

VARIABLE SPEED
DC FAN

5

4

VENTURI

69

3

SUPPLEMENTARY
BURNER

3

GOVERNOR/
VALVE

GAS
SUPPLY

**EP 1 601 896 B1**

**REFERENCES CITED IN THE DESCRIPTION**

**Patent documents cited in the description**

- GB 2156963 A
- US 4169354 A
- US 3905193 A
- US 5184592 A